# EUROPEAN PATENT SPECIFICATION

(11) **EP 2 100 662 B1**
(45) Date of publication and mention of the grant of the patent: **09.07.2014**
(21) Application number: 08702961.7
(22) Date of filing: 08.01.2008
(51) Int. Cl.: B01J 37/04, B01J 21/06, B01J 23/00, B01J 23/78, B01J 23/89, C01G 23/00, C01B 3/38, C01B 3/40

(54) **CARBON DIOXIDE REFORMING CATALYST AND METHOD FOR PRODUCTION THEREOF**
KATALYSATOR ZUR REFORMIERUNG VON KOHLENDIOXID UND HERSTELLUNGSVERFAHREN DAFÜR
CATALYSEUR DE REFORMAGE DE DIOXYDE DE CARBONE ET SON PROCÉDÉ DE PRODUCTION

(30) Priority: 09.01.2007 JP 2007001277
(43) Date of publication of application: 16.09.2009
(73) Proprietor: Murata Manufacturing Co. Ltd., Kyoto 617-8555 (JP)
(72) Inventor: SAITO, Yoshinori, Nagaokakyo-shi Kyoto 617-8555 (JP); SATO, Hideto, Nagaokakyo-shi Kyoto 617-8555 (JP)
(74) Representative: Thoma, Michael
(86) International application number: PCT/JP2008/050081
(87) International publication number: WO 2008/084785

(56) References cited:
- WO-A1-2006/137211
- GB-A- 1 155 843
- JP-A- 10 194 703
- JP-A- 2001 270 703
- JP-A- 2006 346 598
- JP-A- 2007 055 849
- US-A1- 2005 027 134
- OMATA K ET AL: "Strontium carbonate supported cobalt catalyst for dry reforming of methane under pressure", CATALYSIS COMMUNICATIONS, ELSEVIER SCIENCE, AMSTERDAM, NL, vol. 5, no. 12, 1 December 2004 (2004-12-01), pages 755-758, XP004641247, ISSN: 1566-7367, DOI: 10.1016/J.CATCOM.2004.09.012

## Description

### Technical Field

The present invention relates to a carbon dioxide reforming catalyst that is used when a synthetic gas containing hydrogen and carbon monoxide is manufactured by carbon dioxide reforming of a hydrocarbon feedstock gas, to a method for manufacturing a synthetic gas using the carbon dioxide reforming catalyst, and to a support for a carbon dioxide reforming catalyst.

### Background Art

In recent years, since carbon dioxide is a major material causing the global warming, reduction in discharge amount of carbon dioxide and effective use thereof have been regarded as urgent requirements.

In addition, although being generated from technical fields of petroleum refining, petroleum chemistry, and the like, various hydrocarbon gases are not always efficiently utilized, for example, as feedstock gases for various substances, and a method for converting hydrocarbon gases into more effective substances has been actually desired.

Under the circumstances as described above, as a method for manufacturing a synthetic gas containing hydrogen and carbon monoxide by reaction between a hydrocarbon and carbon dioxide, a method has been known (carbon dioxide reforming of a hydrocarbon) in which a saturated hydrocarbon, such as methane, functioning as a reducing agent is allowed to react with carbon dioxide in the presence of a catalyst so as to form hydrogen and carbon monoxide, which are industrially effective synthetic gases, by conversion.

In addition, as a carbon dioxide reforming catalyst for a hydrocarbon, a nickel-supported catalyst in which nickel is supported on a base material of alumina or the like and a ruthenium-supported catalyst (see Japanese Unexamined Patent Application Publication No. 8-231204) supporting ruthenium have been known, and further a rhodium-supported catalyst (see Japanese Unexamined Patent Application Publication No. 9-168740) in which rhodium is supported on a base material of alumina or the like has also been known.

However, when a nickel-supported catalyst is used, carbon deposition is liable to occur on the catalyst, and due to decrease in activity caused by this carbon deposition, there has been a problem in that stable and efficient apparatus operation is difficult to perform.

In addition, since a ruthenium-supported catalyst as disclosed in Japanese Unexamined Patent Application Publication No. 8-231204 has a function to suppress carbon deposition, the carbon deposition is suppressed as compared to that of a nickel-supported catalyst, and the activity can also be easily maintained; however, when an unsaturated hydrocarbon, such as ethylene, is also present in a feedstock, thermal carbon deposition and decrease in activity are liable to occur, and although having an effect to suppress carbon deposition, a ruthenium-supported catalyst is poisoned by an unsaturated hydrocarbon contained in a feedstock gas, so that a problem in that the activity is decreased occurs.

In addition, it has also been believed that a rhodium-supported catalyst as disclosed in Japanese Unexamined Patent Application Publication No. 9-168740 in which rhodium is supported on a base material of alumina or the like has the same problem as described above. Furthermore, document OMATA K et al.: "Strontium carbonate supported cobalt catalyst for dry reforming of methane under pressure", CATALYSIS COMMUNICATIONS, ELSEVIER SCIENCE, AMSTERDAM, NL, vol. 5, no. 12, 1 December 2004 (2004-12-01) pages 755-758, XP004641247, ISSN: 1566-7367 discloses a cobalt catalyst supported on strontium carbonate for dry reforming of methane. Furthermore, document GB 1155843 discloses a catalyst comprising nickel and the carbonate of an alkaline earth material selected from Ca, Sr and Ba. Finally, document US 2005/027134 discloses a catalyst support comprising a carbonate of an alkaline earth material.

### Problems to be Solved by the Invention

An object of the present invention is to provide a carbon dioxide reforming catalyst that can solve the above problems and that, while carbon deposition is suppressed, can efficiently generate hydrogen and carbon monoxide by a reaction between a hydrocarbon feedstock gas and carbon dioxide (performing carbon dioxide reforming); a method using the carbon dioxide reforming catalyst for efficiently manufacturing a synthetic gas containing hydrogen and carbon monoxide; and a support for a carbon dioxide reforming catalyst. In particular, it is desired that the carbonate is suppressed from being sintered and a reaction converting a hydrocarbon feedstock gas and carbon dioxide into carbon monoxide and hydrogen is promoted.

### Means for Solving the Problems

In order to achieve the above object, a carbon dioxide reforming catalyst of Claim 1 is:
a carbon dioxide reforming catalyst that reforms a hydrocarbon feedstock gas by carbon dioxide and that is used to generate a synthetic gas containing carbon monoxide and hydrogen, and the carbon dioxide reforming catalyst comprises
a mixture of a carbonate of at least one alkaline earth metal selected from the group consisting of Ca, Sr, and Ba and a catalytic metal promoting a decomposition reaction of a hydrocarbon feedstock gas, and ATiO₃, wherein A is at least one alkaline earth metal selected from the group consisting of Ca, Sr, and Ba.

In addition, in the carbon dioxide reforming catalyst of Claim 2, according to Claim 1, the catalytic metal is at least one selected from the group consisting of Ni, Rh, Ru, Ir, Pd, Pt, Re, Co, Fe, and Mo.

In addition, a method of Claim 3 for manufacturing a synthetic gas is:
a method for manufacturing a synthetic gas containing carbon monoxide and hydrogen by carbon dioxide reforming of a hydrocarbon feedstock gas, and the above method comprises the steps of:
   performing carbon dioxide reforming of a feedstock gas containing methane as a primary component by using the carbon dioxide reforming catalyst according to one of Claims 1 to 3.

In addition, a support of Claim 4 for a carbon dioxide reforming catalyst is:
a support for a carbon dioxide reforming catalyst that is used to generate a synthetic gas containing carbon monoxide and hydrogen by reforming a hydrocarbon feedstock gas using carbon dioxide, and the above support comprises
a carbonate of at least one alkaline earth metal selected from the group consisting of Ca, Sr, and Ba and ATiO₃ wherein A is at least one alkaline earth metal selected from the group consisting of Ca, Sr, and Ba.

### Advantages

The carbon dioxide reforming catalyst of Claim 1 includes a mixture as a primary component that contains a carbonate of at least one alkaline earth metal selected from the group consisting of Ca, Sr, and Ba and a catalytic metal promoting a decomposition reaction of a hydrocarbon feedstock gas. When this carbon dioxide reforming catalyst is used, a hydrocarbon feedstock gas is reformed by carbon dioxide while carbon deposition is suppressed, and a synthetic gas containing carbon monoxide and hydrogen can be efficiently generated.

That is, when carbon dioxide and methane as a hydrocarbon are supplied to the carbon dioxide reforming catalyst of the present invention at a high temperature, for example, of 800 to 1,100°C, the above catalyst functions as a catalyst to cause the following reactions.

CH₄ ⇒ C + 2H₂ (1)

C + CO₂ ⇒ 2CO (2)

CH₄ + CO₂ ⇒ 2H₂ + 2CO (3)

In a carbon dioxide reforming reaction of methane (CH₄), the decomposition reaction of CH₄ of the formula (1) and the reaction generating CO of the formula (2) are advanced, and as a result, the carbon dioxide reforming reaction is represented by the formula (3).

According to a conventional catalyst using an oxide, such as alumina or silica, as a support, the reaction rate of the formula (2) is lower than that of the formula (1), and as a result, carbon deposition occurs.

On the other hand, the carbon dioxide reforming catalyst of the present invention particularly has an effect to promote the reaction of the formula (2), and carbon generated according to the reaction of the formula (1) that is started and promoted primarily by a function of the catalytic metal can be removed by the reaction of the formula (2). Hence, as a result, the carbon deposition can be suppressed.

In addition, according to the present invention, the type of catalytic metal is not particularly limited, and various metals may be used; however, as with the carbon dioxide reforming catalyst of Claim 2, when at least one selected from the group consisting of Ni, Rh, Ru, Ir, Pd, Pt, Re, Co, Fe, and Mo is used as a catalytic metal, a carbon dioxide reforming catalyst that can efficiently perform a carbon dioxide reforming reaction can be obtained.

In addition, as ATiO₃ (A is at least one alkaline earth metal selected from the group consisting of Ca, Sr, and Ba) is further contained, the carbonate is suppressed from being sintered, and a reaction converting a hydrocarbon feedstock gas and carbon dioxide into carbon monoxide and hydrogen can be promoted.

In addition, a carbon dioxide reforming catalyst containing a catalytic metal and a mixed material of ATiO₃ and a carbonate of at least one alkaline earth metal selected from the group consisting of Ca, Sr, and Ba has an effect to promote the reaction of the above formula (2), and hence carbon generated by the hydrocarbon decomposition reaction (methane decomposition reaction) of the above formula (1) that is efficiently advanced by the above catalytic metal component can be efficiently removed by the reaction of the formula (2).

In addition, it has been believed that a carbonate of an alkaline earth metal, such as BaCO₃, is effective to promote the reaction of the formula (2), and hence a carbon dioxide reforming catalyst that contains, as a primary component, a catalytic metal and a carbonate of an alkaline earth metal and that contains no ATiO₃ is also useful as a carbon dioxide reforming catalyst capable of suppressing carbon deposition. However, by only using BaCO₃, the surface area of a catalyst is decreased by sintering, and thereby the activity thereof tends to degrade; hence, as for the reaction conditions, selection of a catalytic metal, and the like, selective conditions must be searched.

On the other hand, in the case of a carbon dioxide reforming catalyst in which a catalytic metal is blended with a mixed material of ATiO₃ and a carbonate of at least one alkaline earth metal selected from the group consisting of Ca, Sr, and Ba, the decrease in surface area can be suppressed, and the catalytic activity can be maintained, so that carbon dioxide reforming can be more reliably performed.

The carbon dioxide reforming catalyst may be manufactured by a step of absorbing carbon dioxide, for example, in an alkaline earth/Ti composite oxide, such as Ba₂TiO₄, having a carbon dioxide absorption ability, so that a BaCO₃ phase can be efficiently formed on a catalyst surface, which is a reaction site, and as a result, a mixture having superior properties can be obtained.

In addition, the carbon dioxide reforming catalyst can be manufactured by firing, in the presence of barium carbonate, green sheets, green sheet wastes, green sheet laminate wastes, green sheet precursors, or the like that contain a predetermined alkaline earth metal and Ti at a molar ratio (alkaline earth metal/Ti) of 0.9: 1.1, that include, as a primary component, a substance having a perovskite structure as a primary crystalline structure, and that are used in a process for manufacturing an electronic element, and hence while resources are being reused, a carbon dioxide-gas absorber having a superior carbon dioxide-gas absorption ability can be efficiently obtained.

When a metal component to be used as a catalytic metal is not contained in green sheets, green sheet wastes, green sheet laminate wastes, green sheet precursors, or the like, the carbon dioxide reforming catalyst can be obtained by addition of a catalytic metal, and when a catalytic metal is contained, the carbon dioxide reforming catalyst can be obtained without particularly adding a catalytic metal.

The green sheets are, for example, sheets that are formed from a slurry containing BaTiO₃ as a primary component and a binder mixed therewith for manufacturing an electronic element, and when becoming unnecessary after the formation, the green sheets can be used as a feedstock of the carbon dioxide reforming catalyst.

In addition, the green sheet wastes are, for example, unnecessary sheets each obtained after a necessary portion is taken out from the above green sheet and can be preferably used as a feedstock of the carbon dioxide reforming catalyst.

As the green sheet laminate wastes, for example, there may be mentioned unsintered laminate wastes each formed by laminating a plurality of the above green sheets provided with an electrode material printed thereon, followed by pressure bonding, and these can also be preferably used as a feedstock of the carbon dioxide reforming catalyst.

In addition, as the green sheet precursors, for example, there may be mentioned a ceramic slurry in which BaTiO₃ is dispersed in a dispersing agent together with a binder and BaTiO₃ prepared to be dispersed in a dispersing agent, and when becoming unnecessary for manufacturing an electronic element after preparation, the green sheet precursors can be used as a feedstock of the carbon dioxide reforming catalyst.

In addition, as with the method for manufacturing a synthetic gas of the present invention, when carbon dioxide reforming of a feedstock gas primarily containing methane is performed by using the carbon dioxide reforming catalyst of the present invention, a synthetic gas containing carbon monoxide and hydrogen can be efficiently manufactured from a feedstock gas primarily containing methane.

In addition, the support of the present invention for the carbon dioxide reforming catalyst includes a substance as a primary component that contains a carbonate of at least one alkaline earth metal selected from the group consisting of Ca, Sr, and Ba, and when a catalytic metal is blended with the above support, the carbon dioxide reforming catalyst of Claim 1 of the present invention can be easily and reliably obtained.

In addition, since the support further comprises ATiO₃ (A is at least one alkaline earth metal selected from the group consisting of Ca, Sr, and Ba), when a catalytic metal is blended with the above support, the carbon dioxide reforming catalyst can be easily and reliably obtained.

### Brief Description of Drawings

Fig. 1 is a view showing a schematic structure of a test apparatus used for carrying out a manufacturing method of a synthetic gas according to an example of the present invention.
Fig. 2 is a view showing the change in composition of a reformed gas (outlet-side gas) with time obtained by a reforming test using a carbon dioxide reforming catalyst C according to an example of the present invention.

### Reference Numerals

1 reaction tube
2 heater
3 carbon dioxide reforming catalyst
4 inlet of reaction tube
5 outlet of reaction tube

### Best Modes for Carrying Out the Invention

Hereinafter, with reference to examples of the present invention, the features of the present invention will be further described in detail.

### EXAMPLE 1

### [Manufacturing of Carbon Dioxide Reforming Catalyst]

### (1) Manufacturing of Carbon Dioxide Reforming Catalyst A

Barium carbonate (BaCO₃) and titanium oxide (TiO₂) were weighed a so as to have a molar ratio of 1.0: 1.0, and further, nickel oxide (NiO) was added thereto and mixed therewith so as to have a ratio of 2 percent by weight. Next, pelletizing was performed after a binder was added to the mixture thus obtained, so that spherical pellets having a diameter of 2 to 5 mm were obtained.

In addition, the granular pellets thus obtained were fired at 1,000°C for 1 hour in air, thereby obtaining the carbon dioxide reforming catalyst A that was a mixture containing BaTiO₃ and NiO.

In addition, from the weight change of the granular pellets before and after the firing and the result of XRD measurement, it was confirmed that the carbon dioxide reforming catalyst thus obtained was a mixture of BaTiO₃ and NiO.

In addition, at least part of the above NiO was reduced in a carbon dioxide reforming reaction step of a hydrocarbon feedstock gas so as to function as a catalytic metal promoting carbon dioxide reforming of a hydrocarbon feedstock gas.

### (2) Manufacturing of Carbon Dioxide Reforming Catalyst B

NiO was added to and mixed with BaCO₃ so as to have a ratio of 2 percent by weight. Next, pelletizing was performed after a binder was added to the mixture thus obtained, so that spherical pellets having a diameter of 2 to 5 mm were obtained. Next, these granular pellets thus obtained were fired at 900°C for 1 hour in air, thereby obtaining the carbon dioxide reforming catalyst B that was a mixture containing BaCO₃ and NiO.

In addition, from the weight change of the granular pellets before and after the firing and the result of XRD measurement, it was confirmed that the carbon dioxide reforming catalyst B thus obtained was a mixture of BaCO₃ and NiO.

In addition, at least part of the above NiO was reduced in a carbon dioxide reforming reaction step of a hydrocarbon feedstock gas so as to function as a catalytic metal promoting carbon dioxide reforming of a hydrocarbon feedstock gas.

### (3) Manufacturing of Carbon Dioxide Reforming Catalyst C

BaCO₃ and TiO₂ were weighed so as to have a molar ratio of 2.0 to 1.0, and NiO was further added thereto and mixed therewith so as to have a ratio of 2 percent by weight.

Next, pelletizing was performed after a binder was added to the mixture thus obtained, so that spherical pellets having a diameter of 2 to 5 mm were obtained.

Next, these granular pellets thus obtained were fired at 1,000°C for 1 hour in air, so that a mixture of Ba₂TiO₄ and NiO was obtained. Subsequently, this mixture was fired at 700°C for 1 hour in a stream containing 20% of CO₂ and 80% of N₂, thereby obtaining the carbon dioxide reforming catalyst C that was a mixture containing BaCO₃, BaTiO₃, and NiO.

In addition, from the weight change of the mixture of Ba₂TiO₄ and NiO before and after the firing and the result of XRD measurement, it was confirmed that the carbon dioxide reforming catalyst C thus obtained was a mixture of BaCO₃, BaTiO₃, and NiO.

In addition, as for BaCO₃ and BaTiO₃ forming this carbon dioxide reforming catalyst C, it was confirmed that from the above-described weight change before and after the firing and result of XRD measurement, all Ba₂TiO₄ was decomposed into BaCO₃ and BaTiO₃, and that the molar ratio of BaCO₃ to BaTiO₃ was 1.0 to 1.0.

In addition, as described above, in the process for manufacturing a carbon dioxide reforming catalyst, after the Ba₂TiO₄ phase was synthesized, the BaCO₃ phase was formed by a reaction with CO₂; hence, the BaCO₃ phase could be efficiently formed on a catalyst surface, which was a reaction site. In the following carbon dioxide reforming catalysts D, E, and F, the same thing as described above also occurred.

Furthermore, also in this carbon dioxide reforming catalyst C, at least part of the above NiO was reduced in a carbon dioxide reforming reaction step of a hydrocarbon feedstock gas so as to function as a catalytic metal promoting carbon dioxide reforming of a hydrocarbon feedstock gas.

### (4) Manufacturing of Carbon Dioxide Reforming Catalyst D

BaCO₃ and TiO₂ were weighed so as to have a molar ratio of 1.5 to 1.0, and NiO was further added thereto and mixed therewith so as to have a ratio of 2 percent by weight. Next, pelletizing was performed after a binder was added to the mixture thus obtained, so that spherical pellets having a diameter of 2 to 5 mm were obtained.

Next, these granular pellets thus obtained were fired at 1,000°C for 1 hour in air, so that a mixture of Ba₂TiO₄, BaTiO₃, and NiO was obtained.

Furthermore, this mixture was fired at 700°C for 1 hour in a stream containing 20% of CO₂ and 80% of N₂, thereby obtaining the carbon dioxide reforming catalyst D that was a mixture containing BaCO₃, BaTiO₃, and NiO.

In addition, from the weight change of the mixture before and after the firing and the result of XRD measurement, it was confirmed that the carbon dioxide reforming catalyst D thus obtained was a mixture of BaCO₃, BaTiO₃, and NiO.

In addition, as for BaCO₃ and BaTiO₃ forming this carbon dioxide reforming catalyst D, it was confirmed that from the above-described weight change before and after the firing and result of XRD measurement, all Ba₂TiO₄ was decomposed into BaCO₃ and BaTiO₃, and that the molar ratio of BaCO₃ to BaTiO₃ was 0.5 to 1.0.

In addition, also in the case of this carbon dioxide reforming catalyst D, at least part of the above NiO was reduced in a carbon dioxide reforming reaction step of a hydrocarbon feedstock gas so as to function as a catalytic metal promoting carbon dioxide reforming of a hydrocarbon feedstock gas.

### (5) Manufacturing of Carbon Dioxide Reforming Catalyst E

BaCO₃ and TiO₂ were weighed so as to have a molar ratio of 1.2 to 1.0, and NiO was further added thereto and mixed therewith so as to have a ratio of 2 percent by weight. Next, pelletizing was performed after a binder was added to the mixture thus obtained, so that spherical pellets having a diameter of 2 to 5 mm were obtained.

Next, these granular pellets thus obtained were fired at 1,000°C for 1 hour in air, so that a mixture of Ba₂TiO₄, BaTiO₃, and NiO was obtained.

Furthermore, this mixture was fired at 700°C for 1 hour in a stream containing 20% of CO₂ and 80% of N₂, thereby obtaining the carbon dioxide reforming catalyst E that was a mixture containing BaCO₃, BaTiO₃, and NiO.

In addition, from the weight change of the mixture before and after the firing and the result of XRD measurement, it was confirmed that the carbon dioxide reforming catalyst E thus obtained was a mixture of BaCO₃, BaTiO₃, and NiO.

As for BaCO₃ and BaTiO₃ forming this carbon dioxide reforming catalyst E, it was confirmed that from the above-described weight change before and after the firing and result of XRD measurement, all Ba₂TiO₄ was decomposed into BaCO₃ and BaTiO₃, and that the molar ratio of BaCO₃ to BaTiO₃ was 0.2 to 1.0.

In addition, also in the case of this carbon dioxide reforming catalyst E, at least part of the above NiO was reduced in a carbon dioxide reforming reaction step of a hydrocarbon feedstock gas so as to function as a catalytic metal promoting carbon dioxide reforming of a hydrocarbon feedstock gas.

### (6) Manufacturing of Carbon Dioxide Reforming Catalyst F

BaCO₃ and TiO₂ were weighed so as to have a molar ratio of 1.1 to 1.0, and NiO was further added thereto and mixed therewith so as to have a ratio of 2 percent by weight. Next, pelletizing was performed after a binder was added to the mixture thus obtained, so that spherical pellets having a diameter of 2 to 5 mm were obtained.

Next, these granular pellets thus obtained were fired at 1,000°C for 1 hour in air, so that a mixture of Ba₂TiO₄, BaTiO₃, and NiO was obtained.

Furthermore, this mixture was fired at 700°C for 1 hour in a stream containing 200 of CO₂ and 80% of N₂, thereby obtaining the carbon dioxide reforming catalyst F that was a mixture containing BaCO₃, BaTiO₃, and NiO.

In addition, from the weight change of the mixture before and after the firing and the result of XRD measurement, it was confirmed that the carbon dioxide reforming catalyst F thus obtained was a mixture of BaCO₃, BaTiO₃, and NiO.

As for BaCO₃ and BaTiO₃ forming this carbon dioxide reforming catalyst F, it was confirmed that from the above-described weight change before and after the firing and result of XRD measurement, all Ba₂TiO₄ was decomposed into BaCO₃ and BaTiO₃, and that the molar ratio of BaCO₃ to BaTiO₃ was 0.1 to 1.0.

In addition, also in the case of this carbon dioxide reforming catalyst F, at least part of the above NiO was reduced in a carbon dioxide reforming reaction step of a hydrocarbon feedstock gas so as to function as a catalytic metal promoting carbon dioxide reforming of a hydrocarbon feedstock gas.

### (7) Manufacturing of Carbon Dioxide Reforming Catalyst G

After a necessary region of a green sheet was obtained by punching out or the like and was used, an unnecessary part (unnecessary green sheet) obtained thereby was degreased at 500°C, so that a ceramic powder containing 87% of BaTiO₃ was obtained. The ceramic green sheet was to be used for manufacturing a multilayer ceramic capacitor, contained Ba and Ti at a molar ratio (B/Ti) of 0.99 to 1.01, and included, as a primary component, a substance (BaTiO₃) having a perovskite structure as a primary crystalline structure.

In addition, as the balance of this ceramic powder, oxides of Ca, Zr, Si, Na, and Ni were primarily contained.

Subsequently, after a certain amount of BaCO₃ was added to the above ceramic powder so as to obtain a Ba/Ti molar ratio of 2: 1, and water was further added, mixing was performed using a ball mill for 2 hours, and the mixture thus obtained was then dried at 120°C for 10 hours, followed by adding a binder, so that spherical pellets having a diameter of 2 to 5 mm were obtained.

Next, after the pellets obtained in the above step were degreased at 500°C for 2 hours, firing was performed at 1,000°C for 1 hour, so that a mixture containing Ba₂TiO₄ as a primary component and NiO (Ni oxide contained as the balance of the above ceramic powder) was obtained.

Subsequently, this mixture was fired at 700°C for 1 hour in a stream containing 20% of CO₂ and 80% of N₂, thereby obtaining the carbon dioxide reforming catalyst G that was a mixture containing BaCO₃, BaTiO₃, and NiO.

In addition, from the weight change of the mixture before and after the firing and the result of XRD measurement, it was confirmed that the carbon dioxide reforming catalyst G thus obtained was a mixture of BaCO₃, BaTiO₃, and NiO.

This carbon dioxide reforming catalyst G actually functions as a carbon dioxide reforming catalyst containing a mixture of BaCO₃, BaTiO₃, and metal Ni as a primary component.

### [Carbon Dioxide Reforming Test and Evaluation of Properties]

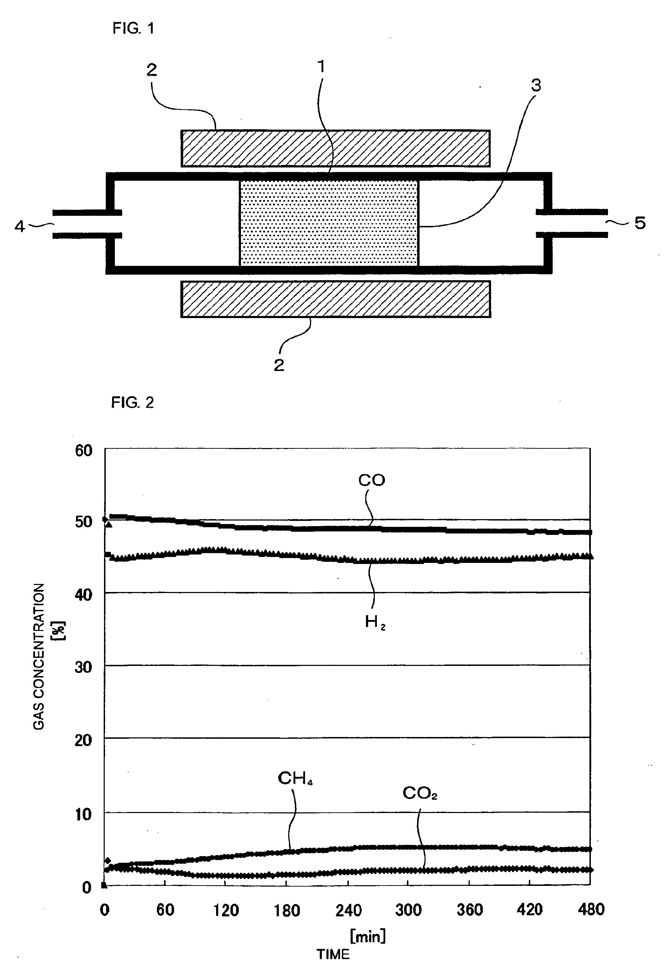

As shown in Fig. 1, after 50 cc of a carbon dioxide reforming catalyst 3 formed as described above was charged in a stainless steel-made reactor tube 1 which was provided with an external heater 2 and which had an inner diameter of 22 mm and a length of 300 mm, a mixed gas containing nitrogen and carbon dioxide (ratio of carbon dioxide: 20 percent by volume) was supplied through the reactor tube 1 at a rate of 25 NL/h from an inlet 4 thereof, and a mixed-gas inlet temperature was controlled at 900°C by the heater. After the temperature of the mixed gas thus supplied was stabilized, instead of the above mixed gas, a mixed gas containing methane and carbon dioxide (CH₄: CO₂ = 1: 1 (volume ratio)) was supplied at a rate of 25 NL/h, so that a reforming test was performed at 900°C.

Subsequently, a reformed gas which was discharged from an outlet 5 of the reactor tube 1 and which was processed by carbon dioxide reforming was introduced into an analytical apparatus (gas chromatograph manufactured by Shimadzu Corporation), and the composition of the reformed gas was investigated.

In addition, after the test was finished, the carbon dioxide reforming catalyst was taken out and was then sieved, so that deposited carbon was recovered.

Furthermore, XRD measurement was performed for the carbon dioxide reforming catalyst that was recovered after the test was finished, so that its crystalline phase was identified.

In addition, for comparison purpose, a commercially available methane reforming catalyst H that contained NiO and alumina as a primary component was prepared, and a carbon dioxide reforming test of methane was performed under conditions similar to those described above.

In Table 1, the composition of an obtained reformed gas, the weight of carbon powder recovered after the test was finished, and the crystalline phase of a carbon dioxide reforming catalyst obtained after the test was finished are shown.

In addition, in a reforming test of Test No. 8 using a commercially available carbon dioxide reforming catalyst H, the reaction tube was clogged up with deposited carbon approximately 1 hour after the start of this test, so that the test result obtained for 1 hour from the start to the clogging is only shown in Table 1.

In addition, in Fig. 2, the change in composition of a reformed gas (outlet-side gas) with time in a reforming test using the carbon dioxide reforming catalyst C is shown.

**[Table 1]**

| Test No. | Catalyst | Reformed Gas Composition | | | | Deposited Carbon (g) | BaCO₃:BaTiO₃ in Catalyst (Molar ratio) | Crystalline Phase after Test |
|---|---|---|---|---|---|---|---|---|
| | | H₂ (%) | CO (%) | CH₄ (%) | CO₂ (%) | | | |
| 1 (Comparative example) | A | 46.5 | 48.5 | 3.5 | 1.5 | 3.5 | - | BaTiO₃, Ni |
| 2 (*) | B | 1.2 | 1.4 | 49.0 | 48.4 | 0 | - | BaCO₃, Ni |
| 3 | C | 44.9 | 48.0 | 5.2 | 1.9 | 0 | 1.0: 1.0 | BaCO₃, BaTiO₃, Ni |
| 4 | D | 45.2 | 48.5 | 4.8 | 1.5 | 0 | 0.5: 1.0 | BaCO₃, BaTiO₃, Ni |
| 5 | E | 46.1 | 48.8 | 4.3 | 1.3 | 0 | 0.2: 1.0 | BaCO₃, BaTiO₃, Ni |
| 6 | F | 46.2 | 48.8 | 4.3 | 1.4 | 0.8 | 0.1: 1.0 | BaCO₃, BaTiO₃, Ni |
| 7 | G | 48.1 | 47.6 | 2.6 | 1.7 | 0 | 1.0: 1.0 | BaCO₃, BaTiO₃, Ni |
| 8 (Conventional example) | H | 46.9 | 41.5 | 0.5 | 11.1 | 10g≤ | - | Ni, other oxides |

| | | | | | | | | |
|---|---|---|---|---|---|---|---|---|
| * = Comparative example | | | | | | | | |

As shown in Table 1, according to the reforming test of Test No. 8 using the commercially available carbon dioxide reforming catalyst H, it was confirmed that the reaction tube was clogged up with deposited carbon approximately 1 hour after the start of the test.

On the other hand, according to the reforming tests of Test Nos. 3, 4, and 5 each using a carbon dioxide reforming catalyst satisfying the points of the present invention, that is, according to the reforming tests using the carbon dioxide reforming catalysts C, D, and E in which NiO was added to a mixed material of BaCO₃ and BaTiO₃, it was confirmed that a high conversion rate of CH₄ (methane) and CO₂ (carbon dioxide) was ensured without generating carbon deposition, and that carbon monoxide (CO) and hydrogen (H₂) could be efficiently manufactured from CH₄ and CO₂.

In addition, according to the test of Test No. 6 using the catalyst F, it was also confirmed that a high conversion rate of CH₄ and CO₂ was obtained. However, according to Test No. 6, a small amount of deposited carbon was observed.

Furthermore, also according to the reforming test of Test No. 7 using the carbon dioxide reforming catalyst G (that is, when being used for carbon dioxide reforming at 900°C in the presence of CO₂, the catalyst G functioned as a carbon dioxide reforming catalyst actually containing a mixture of BaCO₃, BaTiO₃, and NiO as a primary component) that was manufactured using an unnecessary green sheet and that contained Ba₂TiO₄ as a primary component and NiO, it was confirmed that a high conversion rate of CH₄ and CO₂ was obtained. In addition, until the end of the reforming test, no carbon deposition was observed.

In addition, according to the reforming test of Test No. 2 which is a comparative example not according to the invention, using the carbon dioxide reforming catalyst B in which BaCO₃ and NiO were contained, although the conversion rate of CH₄ and CO₂ was not high, carbon deposition was not observed. Incidentally, as with this carbon dioxide reforming catalyst B, also in the case in which a carbon dioxide reforming catalyst containing, as a primary component, an alkaline earth metal carbonate, such as BaCO₃, and a catalytic metal and does not contain ATiO₃ (A is at least one of Ca, Sr, and Ba), such as BaTiO₃, is used, when the type of catalytic metal, the addition amount thereof, and conditions for a reforming reaction are appropriately adjusted, the conversion rate of CH₄ and CO₂ can be increased while carbon deposition is suppressed.

On the other hand, according to the reforming test of Test No. 1 using a carbon dioxide reforming catalyst not satisfying the points of the present invention, that is, according to the reforming test using the carbon dioxide reforming catalyst A in which BaTiO₃ and NiO were contained, although the conversion rate of CH₄ and CO₂ was high, it was confirmed that the amount of deposited carbon was unfavorably large, such as 3.5 g.

In the case of a carbon dioxide reforming catalyst satisfying the points of the present invention in which NiO was added to a mixed material of BaCO₃ and BaTiO₃, even in the reforming test 6 using the carbon dioxide reforming catalyst F in which the ratio of BaCO₃ was small (the molar ratio of BaCO₃ to BaTiO₃ was 0.1: 1.0), the amount of deposited carbon was 0.8 g, that is, the amount of deposited carbon was significantly decreased as compared to 3.5 g that was the amount of deposited carbon obtained in the above Test No. 1 using the carbon dioxide reforming catalyst (mixture of BaTiO₃ and NiO) A in which BaCO₃ was not contained. Hence, according to the present invention, the amount of deposited carbon can be decreased, and the life of a carbon dioxide reforming catalyst can be increased.

In addition, in all the reforming tests of Test Nos. 1 to 7, it was confirmed that a Ni component was present as a metal on the surface of the catalyst that was recovered after the test, and hence it is found that the reason the decomposition of a hydrocarbon, such as CH₄ (methane), is promoted by the carbon dioxide reforming catalyst of the present invention is due to a metal Ni (catalytic metal) present on the surface.

Accordingly, in the carbon dioxide reforming catalyst of the present invention, besides Ni used as the catalytic metal of the above examples, a metal, such as Rh, Ru, Ir, Pd, Pt, Re, Co, Fe, or Mo, that has been known to be effective to promote carbon dioxide reforming of a hydrocarbon, such as CH₄, may be used, and also in this case, an effect similar to that of the above examples can be obtained.

In addition, in order to suppress carbon deposition while a high conversion rate (high activity) is ensured, it is found from Table 1 that the ratio (molar ratio) of BaCO₃ to BaTiO₃ is preferably set such that BaCO₃ : BaTiO₃ = 1.0: 1.0 ∼ BaCO₃: BaTiO₃ = 0.2: 1.0.

However, the present invention is not limited to the above examples, and the manufacturing method of a carbon dioxide reforming catalyst, the type of alkaline earth metal forming a carbon dioxide reforming catalyst, the type of A forming ATiO₃, the content ratio of a catalytic metal, the concrete conditions of a reforming reaction when the carbon dioxide reforming catalyst of the present invention is used, and the like may be variously changed and modified without departing from the scope of the present invention.

### Industrial Applicability

As thus has been described, according to the present invention, a carbon dioxide reforming catalyst can be provided that enables a hydrocarbon feedstock gas to react with carbon dioxide while carbon deposition is suppressed and that can efficiently generate hydrogen and carbon monoxide (can perform carbon dioxide reforming), and by using the above catalyst, a synthetic gas containing hydrogen and carbon monoxide can be efficiently manufactured.

Hence, the present invention can be widely applied to a field of a carbon dioxide reforming catalyst and also to various technical fields in which a synthetic gas containing hydrogen and carbon monoxide is manufactured and/or is used.

## Claims

1. A carbon dioxide reforming catalyst that reforms a hydrocarbon feedstock gas by carbon dioxide and that is used to generate a synthetic gas containing carbon monoxide and hydrogen, the carbon dioxide reforming catalyst comprising a mixture of a carbonate of at least one alkaline earth metal selected from the group consisting of Ca, Sr, and Ba, a catalytic metal promoting a decomposition reaction of a hydrocarbon feedstock gas, and ATiO₃ wherein A is at least one alkaline earth metal selected from the group consisting of Ca, Sr, and Ba.

2. The carbon dioxide reforming catalyst according to Claim 1, wherein the catalytic metal is at least one selected from the group consisting of Ni, Rh, Ru, Ir, Pd, Pt, Re, Co, Fe, and Mo.

3. A method for manufacturing a synthetic gas containing carbon monoxide and hydrogen by carbon dioxide reforming of a hydrocarbon feedstock gas, comprising the steps of:
performing carbon dioxide reforming of a feedstock gas containing methane as a primary component by using the carbon dioxide reforming catalyst according to one of Claims 1 to 2.

4. A support for a carbon dioxide reforming catalyst that is used to generate a synthetic gas containing carbon monoxide and hydrogen by reforming a hydrocarbon feedstock gas using carbon dioxide, the support comprisinga carbonate of at least one alkaline earth metal selected from the group consisting of Ca, Sr, and Ba, and ATiO₃ wherein A is at least one alkaline earth metal selected from the group consisting of Ca, Sr, and Ba.

## Patentansprüche

1. Kohlendioxidreformierender Katalysator, der ein Kohlenwasserstoffeinsatzgas durch Kohlendioxid reformiert und der verwendet wird, um ein Kohlenmonoxid und Wasserstoff enthaltendes synthetisches Gas zu erzeugen, wobei der kohlendioxidreformierende Katalysator eine Mischung aus einem Carbonat mindestens eines Erdalkalimetalls gewählt aus der Gruppe bestehend aus Ca, Sr und Ba, einem katalytischen Metall, das eine Zersetzungsreaktion eines Kohlenwasserstoffeinsatzgases fördert, und ATiO₃ umfasst, wobei A mindestens ein Erdalkalimetall gewählt aus der Gruppe bestehend aus Ca, Sr und Ba ist.

2. Kohlendioxidreformierender Katalysator nach Anspruch 1, wobei das katalytische Metall mindestens eines gewählt aus der Gruppe bestehend aus Ni, Rh, Ru, Ir, Pd, Pt, Re, Co, Fe und Mo ist.

3. Verfahren zum Herstellen eines Kohlenmonoxid und Wasserstoff enthaltenden synthetischen Gases durch Kohlendioxidreformieren eines Kohlenwasserstoffeinsatzgases, welches folgende Schritte umfasst:
Durchführen von Kohlendioxidreformieren eines Einsatzgases, das Methan als primäre Komponente enthält, durch Verwenden des kohlendioxidreformierenden Katalysators nach einem der Ansprüche 1 bis 2.

4. Träger für einen kohlendioxidreformierenden Katalysator, der verwendet wird, um ein Kohlenmonoxid und Wasserstoff enthaltendes synthetisches Gas durch Reformieren eines Kohlenwasserstoffeinsatzgases unter Verwenden von Kohlendioxid zu erzeugen, wobei der Träger ein Carbonat mindestens eines Erdalkalimetalls gewählt aus der Gruppe bestehend aus Ca, Sr und Ba und ATiO₃ umfasst, wobei A mindestens ein Erdalkalimetall gewählt aus der Gruppe bestehend aus Ca, Sr und Ba ist.

## Revendications

1. Catalyseur de reformage de dioxyde de carbone qui reforme une charge d'hydrocarbure gazeux au moyen de dioxyde de carbone et qui est utilisé pour générer un gaz synthétique contenant du monoxyde de carbone et de l'hydrogène, le catalyseur de reformage de dioxyde de carbone comprenant un mélange d'un carbonate d'au moins un métal alcalino-terreux choisi dans le groupe constitué de Ca, Sr et Ba, d'un métal catalytique favorisant une réaction de décomposition d'une charge d'hydrocarbure gazeux, et d'ATiO₃, A étant au moins un métal alcalino-terreux choisi dans le groupe constitué de Ca, Sr et Ba.

2. Catalyseur de reformage de dioxyde de carbone selon la revendication 1, le métal catalytique étant au moins un métal choisi dans le groupe constitué de Ni, Rh, Ru, Ir, Pd, Pt, Re, Co, Fe et Mo.

3. Procédé de fabrication d'un gaz synthétique contenant du monoxyde de carbone et de l'hydrogène par reformage de dioxyde de carbone d'une charge d'hydrocarbure gazeux, comprenant les étapes consistant à :
exécuter un reformage de dioxyde de carbone d'un gaz de charge contenant du méthane en tant que composant primaire en utilisant le catalyseur de reformage de dioxyde de carbone selon l'une des revendications 1 ou 2.

4. Support pour un catalyseur de reformage de dioxyde de carbone qui est utilisé pour générer un gaz synthétique contenant du monoxyde de carbone et de l'hydrogène en reformant une charge d'hydrocarbure gazeux au moyen de dioxyde de carbone, le support comprenant un carbonate d'au moins un métal alcalino-terreux choisi dans le groupe constitué de Ca, Sr et Ba, et de l'ATiO₃, A étant au moins un métal alcalino-terreux choisi dans le groupe constitué de Ca, Sr et Ba.
